# EUROPEAN PATENT SPECIFICATION

(11) **EP 3 708 887 B1**
(45) Date of publication and mention of the grant of the patent: **09.08.2023**
(21) Application number: 20161527.5
(22) Date of filing: 06.03.2020
(51) Int. Cl.: F16K 27/06, F16K 27/12, F16K 31/04, F16K 35/06, F16K 5/20

(54) **MOTORIZED VALVE ASSEMBLY**
MOTORISIERTE VENTILANORDNUNG
ENSEMBLE SOUPAPE MOTORISÉ

(30) Priority: 11.03.2019 IT 201900003453
(43) Date of publication of application: 16.09.2020
(73) Proprietor: Colombo, Renato, 25015 Desenzano del Garda (BS) (IT)
(72) Inventor: Colombo, Renato, 25015 Desenzano del Garda (BS) (IT)
(74) Representative: Modiano, Micaela Nadia

(56) References cited:
- EP-A1- 1 672 261
- EP-A1- 2 492 557
- EP-A1- 2 559 975
- EP-A1- 2 905 519
- EP-A1- 3 109 525
- WO-A1-2010/007511
- WO-A2-2018/085019
- IT-A1- MI20 091 604
- JP-A- H11 153 273
- JP-A- 2017 101 766
- US-A- 5 522 420
- US-A1- 2015 285 311
- US-A1- 2018 119 839

## Description

The present invention relates to a motorized valve assembly.

Flow control valves, typically of the ball type, which are motorized, i.e., have the ball stem functionally connected to a driving shaft, are known and widely used.

Known solutions provide for the use of particularly bulky actuation motors and for a spatial arrangement of the actuation motor at a higher level than the flow control valve, so that during use the stem is arranged along a substantially vertical direction of extension. WO 2018/085019 A2 discloses a prior art motorized valve with an outer housing which only encloses the flow control valve. IT MI20091604 A1 describes a manually actuated prior art valve which is fully housed in an outer box-like housing.

Although known solutions are widely used, they are, however, not free from drawbacks.

First of all, the connection between the motor body and the valve is often particularly impractical, since sometimes it is necessary to use tools or wrenches to perform mutual coupling and uncoupling.

Furthermore, the mutual position between the motor and the valve body makes uncoupling extremely complicated, especially when one wishes to accommodate the valve and the corresponding motor inside an accommodation compartment.

The aim of the present invention is to provide a motorized valve that is capable of improving the background art in one or more of the aspects indicated above.

Within this aim, an object of the invention is to provide a motorized valve that can be easily flush-mounted in a wall but allows easy coupling and uncoupling between the motor body and the valve body.

Another object of the invention is to provide a motorized valve that is highly reliable, relatively easy to provide and at competitive costs.

This aim, as well as these and other objects which will become better apparent hereinafter, are achieved by a motorized valve according to claim 1, optionally provided with one or more of the characteristics of the dependent claims.

Further characteristics and advantages of the invention will become better apparent from the description of a preferred but not exclusive embodiment of the motorized valve according to the invention, illustrated by way of nonlimiting example in the accompanying drawings, wherein:

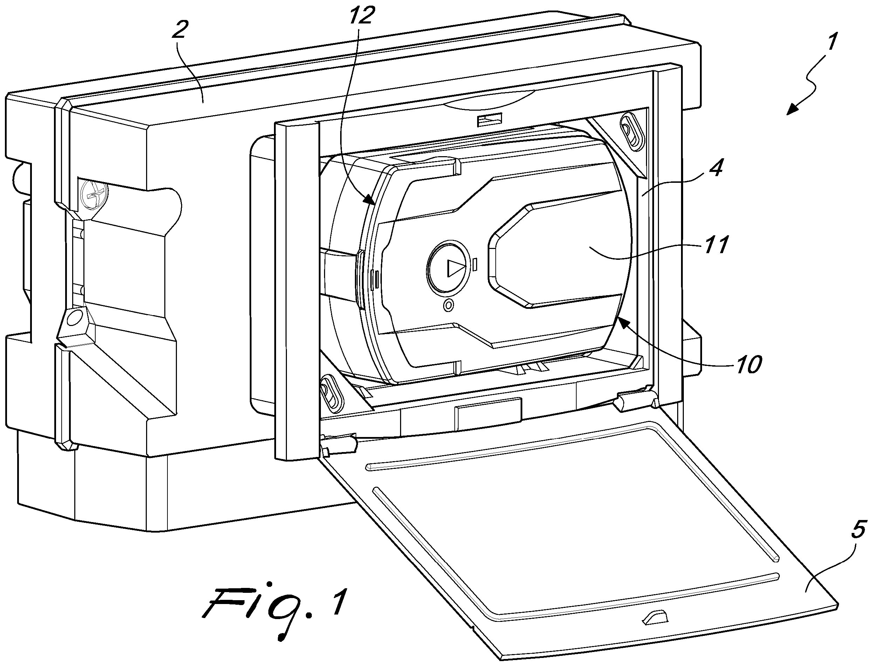

Figure 1 is a perspective view of a motorized valve assembly with the motor connected to the flow control valve and with the extraction body in the inactive condition;

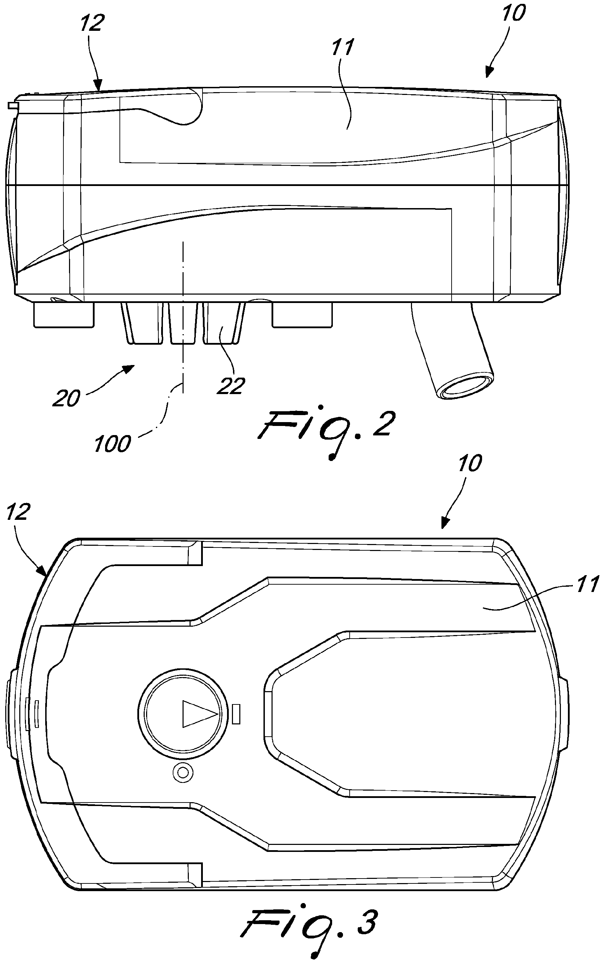

Figure 2 is a top view of the actuation motor with the extraction body in the inactive condition;
Figure 3 is a front view of the actuation motor with the extraction body in the inactive condition;

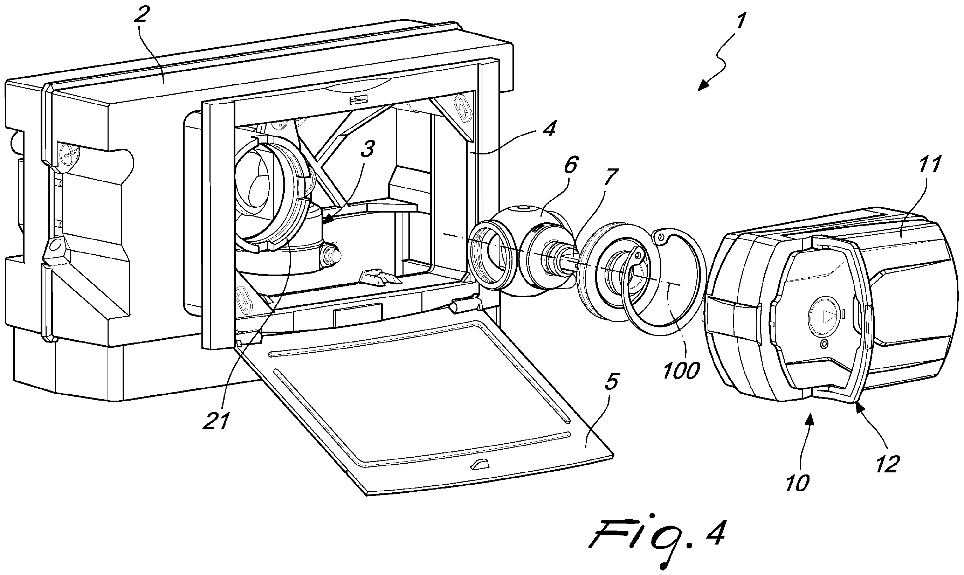

Figure 4 is an exploded perspective view of a motorized valve assembly with the motor not connected to the flow control valve and with the extraction body in the active or extraction condition;

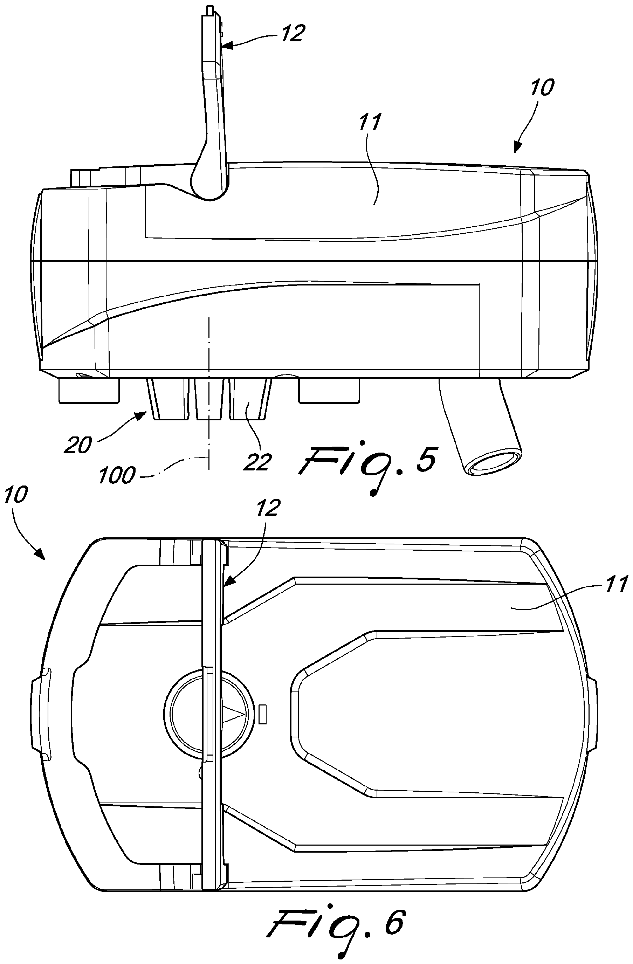

Figure 5 is a top view of the actuation motor with the extraction body in the active condition;
Figure 6 is a front view of the actuation motor with the extraction body in the active condition.

With reference to the cited figures, the motorized valve assembly according to the invention, generally designated by the reference numeral 1, comprises a box-like body 2 for the accommodation of at least one flow control valve 3.

The box-like body 2 forms at least one window 4 for access to the at least one flow control valve 3 and is associated with at least one covering body 5, which can move, with respect to the box-like body 2, between a position for closing the window 4 and an open position in which it allows access to the flow control valve or valves 3.

The flow control valve 3 has a flow control body 6, which can be actuated by an actuation stem 7 which can rotate about an actuation axis 100 which is arranged substantially at right angles to the plane of arrangement of the access window 4.

The motorized valve assembly 1 comprises an actuation motor 10 for the movement of the actuation stem 7 which can be associated detachably, by virtue of coupling means 20, with the flow control valve 3.

Conveniently, the actuation motor 10 is an electric motor powered by the mains, for example by means of a connection via quick couplings.

The actuation motor 10 has a motor body 11 associated with an extraction body 12.

The extraction body 12 can move, with respect to the motor body 11, between an inactive condition, in which the extraction body 12 is completely accommodated within the box-like body 2, and an active or extraction condition, in which the extraction body at least partially passes through the access window 4, so as to facilitate the uncoupling of the actuation motor 10 from the flow control valve 3.

Advantageously, the coupling means 20 comprise first engagement means 21 which are integral with the flow control valve 3 and second engagement means 22 which are integral with the motor body 11.

The first engagement means 21 and the second engagement means 22 can be mutually coupled and uncoupled by means of a mutual movement along a coupling and uncoupling direction that is substantially parallel to the actuation axis 100.

Conveniently, the flow control body 6 comprises a ball which forms a passage opening.

The actuation motor 10 comprises an output shaft which extends, when the motor body 11 is in the active condition, parallel to the actuation axis 100.

Preferably, when the motor body 11 is in the active condition, the direction of extension of the driving shaft coincides with the direction of the stem 7.

According to a preferred embodiment, which is also shown in the accompanying figures, the first engagement means 21 are arranged around the actuation axis 100 and comprise at least one annular protrusion portion.

Specifically, it is possible to provide a plurality of annular protrusion portions arranged along a circumference.

The second engagement means 22 are likewise arranged around the output shaft of the motor and comprise a plurality of teeth which are elastically movable in a radial direction and can be coupled and uncoupled with respect to the annular protrusion portions by means of a mutual approach and spacing movement in an axial direction.

According to a particularly important aspect of the invention, the extraction body 12 comprises a lever system which has at least one portion for pivoting to the motor body 11 and at least one grip portion that is adapted to allow the user, in the active or extraction condition, to apply a force for spacing the motor body 11 from the flow control valve 3 in order to produce the uncoupling between the first engagement means 21 and the second engagement means 22.

Conveniently, the lever system 12a is U-shaped.

Preferably, the lever system can rotate, in order to pass between the inactive condition and the active or extraction condition and vice versa, about a respective pivoting axis which is arranged on a plane of arrangement that is substantially parallel to the plane defined by the window 4.

The solution of the present patent allows to reduce significantly the size of the access window 4 (and therefore of the box-like body 2), which can substantially correspond to the space occupation of the motor body 11.

In fact, by virtue of the presence of the extraction body 12 it is possible to apply a force aimed at uncoupling the motor body 11 from the flow control valve 3 without having to "grip" the motor body 11 directly, which would force to provide a certain free space between the lateral surface of the motor body 11 and the internal edge of the window 4.

The use of the motorized valve assembly 1 according to the invention is as follows.

The box-like accommodation body 2, which advantageously comprises a box made of plastic material designed to be arranged inside masonry structures, accommodates at least one flow control valve 3.

The box-like body accommodates the flow control valve and part of the ducts connected thereto and forms frontally an access window 4 which is substantial arranged flush with the wall.

The flow control valve 3 is provided with a flow control body 6 which is typically constituted by a so-called ball, which can be actuated by an actuation stem 7 which can rotate about its own axis.

The flow control valve 3 is inserted and coupled to the box-like accommodation body so that the axis of the stem 7 extends substantially at right angles to the plane of arrangement of said window 4.

By way of example, if the window 4 is arranged, as usual, on a vertical plane (which corresponds to the wall), the actuation axis 100 of the stem 7 is arranged along a horizontal direction at right angles to said wall.

The coupling of the actuation motor 10 to the flow control valve 3 is performed by moving, through the window 4, the actuation motor 10 inside the box-like body 2 along a direction that is substantially perpendicular to the access window 4, so that the driving shaft engages the stem 7 and so that the first engagement means 21 mate with the second engagement means 22.

When the actuation motor 10 is coupled to the flow control valve 3, if the extraction body 12 is in the inactive condition the entire body of the motor 11 is accommodated within the box-like body 2 and accordingly the covering body 5 can be closed.

If the actuation motor 10 must be removed from the flow control valve 3, for example to perform maintenance operations (both on the valve and on the motor), the user can move the extraction body 12 to the active or extraction condition so that he can easily intervene to be able to apply to the motor body 11 a force for spacing from the flow control valve 3 that is capable of making it easy to mutually uncouple the first and second engagement means although the space occupation of the motor body 11 substantially corresponds to the opening 4.

In practice it has been found that the invention achieves the intended aim and objects.

The invention thus conceived is susceptible of numerous modifications and variations, the scope of protection is defined by the appended claims.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the purpose of increasing the intelligibility of the claims.

## Claims

1. A motorized valve assembly (1) that comprises a box-like body (2) for the accommodation of at least one flow control valve (3), said box-like body (2) forming at least one window (4) for access to said at least one flow control valve (3) and being associated with at least one covering body (5) which can move, with respect to said box-like body (2), between a position for closing said at least one window (4) and an open position, in which it allows access to said at least one flow control valve (3), said flow control valve (3) having a flow control body (6) which can be actuated by an actuation stem (7) which can rotate about an actuation axis (100) arranged substantially at right angles to the plane of arrangement of said access window (4),
**characterized in that** it further comprises an actuation motor (10) for the movement of said actuation stem (7) which can be associated detachably, by virtue of coupling means (20), with said flow control valve (3) and is provided with a motor body (11) associated with an extraction body (12) which is movable with respect to said motor body (11) between an inactive condition, in which it is completely accommodated within said box-like body (2), and an active or extraction condition, in which it passes at least partially through said access window (4), so as to facilitate the uncoupling of said actuation motor (10) from said flow control valve (3), wherein when said actuation motor (10) is coupled to said flow control valve (3), if the extraction body (12) is in said inactive condition, the entire motor body (11) is accommodated within the box-like body (2) and accordingly the covering body (5) can be closed.

2. The motorized valve assembly (1) according to claim 1, **characterized in that** said coupling means (20) comprise first engagement means (21) which are integral with said flow control valve (3) and second engagement means (22) which are integral with said motor body (11) and can be mutually coupled and uncoupled by means of a mutual movement along a coupling and uncoupling direction that is substantially parallel to said actuation axis (100).

3. The motorized valve assembly (1) according to claim 1, **characterized in that** said flow control body (6) comprises a ball which defines a passage opening.

4. The motorized valve assembly (1) according to claim 1, **characterized in that** said actuation motor (10) comprises an output shaft which is extended, with said motor body (11) in the active condition, parallel to said actuation axis (100).

5. The motorized valve assembly (1) according to claim 2, **characterized in that** said first engagement means (21) are arranged around said actuation axis (100) and comprise at least one annular protrusion portion.

6. The motorized valve assembly (1) according to claim 5, **characterized in that** said second engagement means (22) are arranged around said output shaft and comprise a plurality of teeth which are elastically movable in a radial direction and can be coupled and uncoupled with respect to said at least one annular protrusion portion as a consequence of a mutual movement for approach and spacing in an axial direction.

7. The motorized valve assembly (1) according to claim 2, **characterized in that** said extraction body (12) comprises a lever system (12a) which has at least one portion for pivoting to said motor body (11) and at least one grip portion adapted to allow, in said active extraction condition, the user to apply a force for moving said motor body (11) away from said flow control valve (3) in order to produce the uncoupling between said first engagement means (21) and said second engagement means (22).

8. The motorized valve assembly (1) according to claim 7, **characterized in that** said lever system is U-shaped.

9. The motorized valve assembly (1) according to claim 7 or 8, **characterized in that** said lever system can rotate, in order to pass between said inactive condition and said active extraction condition and vice versa, about a respective pivoting axis which is arranged on a plane of arrangement that is substantially parallel to a plane formed by said window (4).

## Patentansprüche

1. Eine motorisierte Ventilanordnung (1), die einen schachtelähnlichen Körper (2) für die Aufnahme mindestens eines Durchflussregelventils (3) umfasst, wobei der schachtelähnliche Körper (2) mindestens ein Fenster (4) für den Zugang zu dem mindestens einen Durchflussregelventil (3) bildet und mit mindestens einem Abdeckkörper (5) verbunden ist, welcher sich mit Bezug auf den schachtelähnlichen Körper (2) zwischen einer Position zum Verschließen des mindestens einen Fensters (4) und einer offenen Position bewegen kann, in welcher er den Zugang zu dem mindestens einen Durchflussregelventil (3) gestattet, wobei das Durchflussregelventil (3) einen Durchflussregelungskörper (6) hat, der von einem Antriebsschaft (7) angetrieben werden kann, welcher sich um eine Antriebsachse (100) drehen kann, die im Wesentlichen in rechten Winkeln zur Anordnungsebene des Zugangsfensters angeordnet ist;
**dadurch gekennzeichnet, dass** sie weiter einen Antriebsmotor (10) zum Bewegen des Antriebsschafts (7) umfasst, der über Kopplungsmittel (20) lösbar mit dem Durchflussregelventil (3) verbunden werden kann und mit einem Motorkörper (11) ausgestattet ist, verbunden mit einem Extraktionskörper (12), welcher mit Bezug auf den Motorkörper (11) beweglich ist zwischen einem inaktiven Zustand, in welchem er vollständig in dem schachtelähnlichen Körper (2) untergebracht ist, und einem aktiven oder Extraktionszustand, in welchem er zumindest teilweise das Zugangsfenster (4) durchdringt, um so die Entkopplung des Antriebsmotors (10) von dem Durchflussregelventil (3) zu erleichtern;
wobei, wenn der Antriebsmotor (10) mit dem Durchflussregelventil (3) gekoppelt ist, wenn der Extraktionskörper (12) sich in dem inaktiven Zustand befindet, der gesamte Motorkörper (11) in den schachtelähnlichen Körper (2) aufgenommen ist und der Abdeckkörper (5) somit geschlossen werden kann.

2. Die motorisierte Ventilanordnung (1) gemäß Anspruch 1, **dadurch gekennzeichnet, dass** die Kopplungsmittel (20) erste Eingriffsmittel (21) umfassen, die integral mit dem Durchflussregelventil (3) sind, und zweite Eingriffsmittel (22), die integral mit dem Motorkörper (11) sind, und durch eine Relativbewegung entlang einer Kopplungs- und Entkopplungsrichtung, die im Wesentlichen parallel zu der Antriebsachse (100) ist, miteinander gekoppelt und voneinander entkoppelt werden können.

3. Die motorisierte Ventilanordnung (1) gemäß Anspruch 1, **dadurch gekennzeichnet, dass** der Durchflussregelungskörper (6) eine Kugel umfasst, die eine Durchgangsöffnung bestimmt.

4. Die motorisierte Ventilanordnung (1) gemäß Anspruch 1, **dadurch gekennzeichnet, dass** der Antriebsmotor (10) eine Abtriebswelle umfasst, die sich, wenn der Motorkörper (11) im aktiven Zustand ist, parallel zu der Antriebsachse (100) erstreckt.

5. Die motorisierte Ventilanordnung (1) gemäß Anspruch 2, **dadurch gekennzeichnet, dass** die ersten Eingriffsmittel (21) um die Antriebsachse (100) angeordnet sind und mindestens einen ringförmigen Vorsprungsabschnitt umfassen.

6. Die motorisierte Ventilanordnung (1) gemäß Anspruch 5, **dadurch gekennzeichnet, dass** die zweiten Eingriffsmittel (22) um die Abtriebswelle herum angeordnet sind und eine Vielzahl von Zähnen umfassen, die in eine radiale Richtung elastisch beweglich sind und infolge einer gegenseitigen Bewegung zur Annäherung und Beabstandung in eine axiale Richtung mit Bezug auf den mindestens einen ringförmigen Vorsprungsabschnitt gekoppelt und entkoppelt werden können.

7. Die motorisierte Ventilanordnung (1) gemäß Anspruch 2, **dadurch gekennzeichnet, dass** der Extraktionskörper (12) ein Hebelsystem (12a) umfasst, das mindestens einen Abschnitt für die drehgelenkige Verbindung mit dem Motorkörper (11) und mindestens einen Griffabschnitt hat, der ausgebildet ist, um es in dem aktiven Extraktionszustand dem Benutzer zu gestatten, eine Kraft auszuüben, um den Motorkörper (11) von dem Durchflussregelventil (3) fort zu bewegen, um die ersten Eingriffsmittel (21) von den zweiten Eingriffsmitteln (22) zu entkoppeln.

8. Die motorisierte Ventilanordnung (1) gemäß Anspruch 7, **dadurch gekennzeichnet, dass** das Hebelsystem U-förmig ist.

9. Die motorisierte Ventilanordnung (1) gemäß Anspruch 7 oder 8, **dadurch gekennzeichnet, dass** das Hebelsystem, um zwischen dem inaktiven Zustand und dem aktiven Extraktionszustand hin- und herzuwechseln, um eine entsprechende Schwenkachse rotieren kann, die sich auf einer Anordnungsebene befindet, welche im Wesentlichen parallel zu einer durch das Fenster (4) gebildeten Anordnungsebene ist.

## Revendications

1. Ensemble soupape motorisé (1) qui comprend un corps en forme de boîte (2) pour loger au moins une soupape de réglage de débit (3), ledit corps en forme de boîte (2) formant au moins une fenêtre (4) pour avoir accès à ladite au moins une soupape de réglage de débit (3) et étant associé à au moins un corps de couverture (5) qui peut se déplacer, par rapport audit corps en forme de boîte (2), entre une position pour fermer ladite au moins une fenêtre (4) et une position ouverte, dans laquelle il permet l'accès à ladite au moins une soupape de réglage de débit (3), ladite soupape de réglage de débit (3) ayant un corps de réglage de débit (6) qui peut être actionné par une tige d'actionnement (7) qui peut tourner autour d'un axe d'actionnement (100) agencé sensiblement en angle droit par rapport au plan d'agencement de ladite fenêtre d'accès (4),
**caractérisé en ce qu'**il comprend en outre un moteur d'actionnement (10) pour le déplacement de ladite tige d'actionnement (7) qui peut être associée, de manière détachable, en vertu des moyens de couplage (20), avec ladite soupape de réglage de débit (3) et est prévue avec un corps de moteur (11) associé à un corps d'extraction (12) qui est mobile par rapport audit corps de moteur (11) entre une condition inactive, dans laquelle elle est complètement logée dans ledit corps en forme de boîte (2) et une condition active ou d'extraction dans laquelle elle passe au moins partiellement à travers ladite fenêtre d'accès (4), afin de faciliter le découplage dudit moteur d'actionnement (10) de ladite soupape de réglage de débit (3), dans lequel lorsque ledit moteur d'actionnement (10) est couplé à ladite soupape de réglage de débit (3), si le corps d'extraction (12) est dans ladite condition inactive, tout le corps de moteur (11) est logé dans le corps en forme de boîte (2) et par conséquent le corps de couverture (5) peut être fermé.

2. Ensemble soupape motorisé (1) selon la revendication 1, **caractérisé en ce que** lesdits moyens de couplage (20) comprennent des premiers moyens de mise en prise (21) qui sont solidaires avec ladite soupape de réglage de débit (3) et des seconds moyens de mise en prise (22) qui sont solidaires dudit corps de moteur (11) et peuvent être mutuellement couplés et découplés au moyen d'un mouvement mutuel et le long d'une direction de couplage et de découplage qui est sensiblement parallèle audit axe d'actionnement (100).

3. Ensemble soupape motorisé (1) selon la revendication 1, **caractérisé en ce que** ledit corps de réglage de débit (6) comprend une bille qui définit une ouverture de passage.

4. Ensemble soupape motorisé (1) selon la revendication 1, **caractérisé en ce que** ledit moteur d'actionnement (10) comprend un arbre de sortie qui est étendu, avec ledit corps de moteur (11) dans la condition active, parallèle audit axe d'actionnement (100).

5. Ensemble soupape motorisé (1) selon la revendication 2, **caractérisé en ce que** lesdits premiers moyens de mise en prise (21) sont agencés autour dudit axe d'actionnement (100) et comprennent au moins une partie de saillie annulaire.

6. Ensemble soupape motorisé (1) selon la revendication 5, **caractérisé en ce que** lesdits seconds moyens de mise en prise (22) sont agencés autour dudit arbre de sortie et comprennent une pluralité de dents qui sont élastiquement mobiles dans une direction radiale et peuvent être couplés et découplés par rapport à ladite au moins une partie de saillie annulaire suite à un mouvement mutuel pour le rapprochement et l'éloignement dans une direction axiale.

7. Ensemble soupape motorisé (1) selon la revendication 2, **caractérisé en ce que** ledit corps d'extraction (12) comprend un système de levier (12a) qui a au moins une partie pour faire pivoter ledit corps de moteur (11) et au moins une partie de préhension adaptée pour permettre, dans ladite condition d'extraction active, à l'utilisateur d'appliquer une force pour éloigner ledit corps de moteur (11) de ladite soupape de réglage de débit (3) afin de produire le découplage entre lesdits premiers moyens de mise en prise (21) et lesdits seconds moyens de mise en prise (22).

8. Ensemble soupape motorisé (1) selon la revendication 7, **caractérisé en ce que** ledit système de levier est en forme de U.

9. Ensemble soupape motorisé (1) selon la revendication 7 ou 8, **caractérisé en ce que** ledit système de levier peut tourner, afin de passer entre ladite condition inactive et ladite condition d'extraction active et vice versa, autour d'un axe de pivotement respectif qui est agencé sur un plan d'agencement qui est sensiblement parallèle à un plan formé par ladite fenêtre (4).
